# EUROPÄISCHE PATENTSCHRIFT

(11) **EP 1 311 413 B1**
(45) Veröffentlichungstag und Bekanntmachung des Hinweises auf die Patenterteilung: **07.07.2004**
(21) Anmeldenummer: 01960145.9
(22) Anmeldetag: 03.08.2001
(51) Int. Cl.: B60R 21/01

(54) **VERFAHREN ZUR BILDUNG EINER AUSLÖSEENTSCHEIDUNG FÜR RÜCKHALTEMITTEL**
METHOD FOR REACHING A RELEASE DECISION FOR RETAINING MEANS
PROCEDE POUR ETABLIR UNE DECISION DE DECLENCHEMENT D'UN SYSTEME DE RETENUE

(30) Priorität: 17.08.2000 DE 10040111
(43) Veröffentlichungstag der Anmeldung: 21.05.2003
(73) Patentinhaber: ROBERT BOSCH GMBH, 70442 Stuttgart (DE)
(72) Erfinder: KOCHER, Pascal, 70839 Gerlingen (DE)
(86) Internationale Anmeldenummer: PCT/DE2001/002966
(87) Internationale Veröffentlichungsnummer: WO 2002/014113

(56) Entgegenhaltungen:
- EP-A- 0 987 151
- WO-A-00/13944
- US-A- 5 185 701
- US-A- 5 949 363
- US-A- 5 964 817

## Beschreibung

### Stand der Technik

Die vorliegende Erfindung betrifft ein Verfahren zur Bildung einer Auslöseentscheidung für Rückhaltemittel in einem Fahrzeug, wobei die Beschleunigung des Fahrzeugs gemessen wird und die gemessene Beschleunigung oder eine daraus abgeleitete Geschwindigkeitsänderung mit einer Auslöseschwelle verglichen wird und ein Überschreiten der Auslöseschwelle zu einer Auslösung der Rückhaltemittel führt, wobei der Verlauf der Auslöseschwelle und damit die Auslöseempfindlichkeit in Abhängigkeit von einer ermittelten Crashschwere gewählt wird.

Ein Verfahren gemäß dem Oberbegriff von Anspruch 1 ist aus US 5964817 bekannt.

Ein Verfahren zur Bildung einer Auslöseentscheidung für Rückhaltemittel ist aus der EP 0 458 796 B2 bekannt. Bei dem in dieser Druckschrift beschriebenen Auslösealgorithmus hängt der Verlauf der Auslöseschwelle von der gemessenen Beschleunigung ab. Durch geeignete Wahl der Auslöseschwelle lassen sich Auslösefälle von Nichtauslösefällen unterscheiden. Es soll nämlich die Auslösung von Rückhaltemitteln (z. B. Airbags, Gurtstraffer) dann verhindert werden, wenn das Fahrzeug nur einen leichten Crash erfährt oder z. B. Bahnschwellen oder Bordsteinkanten überfährt, wobei die Fahrzeuginsassen keiner Verletzungsgefahr ausgesetzt sind. Dagegen soll bei harten Crashes, durch welche die Fahrzeuginsassen in jedem Fall verletzungsgefährdet sind, eine Auslösung der Rückhaltemittel uneingeschränkt gewährleistet werden. Da zwischen Crashes, welche eine Auslösung der Rückhaltemittel erfordern und Crashes, bei denen keine Auslösung erfolgen soll, sehr enge Grenzen liegen, kann es durchaus passieren, dass eine falsche Entscheidung bezüglich Auslösung bzw. Nichtauslösung der Rückhaltemittel getroffen wird. Um eine schnellere und robustere Auslöseentscheidung bei Fahrzeugcrashes zu erzielen, wird in der DE 44 45 996 A1 vorgeschlagen, wie einleitend dargelegt, dass der Verlauf der Auslöseschwelle und damit die Auslöseempfindlichkeit in Abhängigkeit von einer ermittelten Crashschwere gewählt wird. Dazu wird hier eine Frequenzanalyse des gemessenen Beschleunigungssignals durchgeführt, und es werden die dominanten Anteile im Spektrum des Beschleunigungssignals selektiert und entsprechend bewertet. In Abhängigkeit dieser Frequenzanalyse des Beschleunigungssignals wird die Integration des Beschleunigungssignals beeinflusst, indem die zu integrierende Beschleunigung bei kritischen Situationen stärker bewertet wird, so dass eine Auslöseschwelle schneller überschritten wird.

Der Erfindung liegt die Aufgabe zu Grunde, ein Verfahren der eingangs genannten Art anzugeben, mit dem im Vergleich zum Stand der Technik eine noch sicherere und robustere Auslöseentscheidung für Rückhaltemittel getroffen werden kann.

### Vorteile der Erfindung

Die genannte Aufgabe wird mit den Merkmalen des Anspruchs 1 dadurch gelöst, dass aus zeitlich versetzten Beschleunigungsmesswerten die Differenz gebildet wird, dass der Betrag der Differenz integriert wird, dass das Integral mit mindestens einem Schwellwert verglichen wird und dass, wenn das Integral den mindestens einen Schwellwert bis zu einem oder mehreren vorgebbaren Zeitpunkten während des Crashverlaufs nicht überschreitet, der Verlauf der Auslöseschwelle so verändert wird, dass die Auslöseempfindlichkeit geringer wird.

Die in diesem Verfahren angewendete Methode zur Ermittlung der Crashschwere, in Abhängigkeit von der dann die Lage der Auslöseschwelle beeinflusst wird, ermöglicht eine sehr zuverlässige Unterscheidung zwischen Auslösecrashes und Nichtauslösecrashes. Denn das Integral der Differenz von zeitlich versetzten Beschleunigungsmesswerten ist ein Maß für die mechanische Verformung des Fahrzeugs bei einem Crash, und anhand der mechanischen Verformung lässt sich sehr genau feststellen, ob es sich um einen Auslöse- oder einen Nichtauslösecrash handelt. Bei einem Auslösecrash brechen im vorderen Teil des Fahrzeugs viele mechanische Teile, was sich im Beschleunigungssignal durch hochfrequente Signalanteile zu erkennen gibt. Dagegen werden bei einem Nichtauslösecrash mechanische Teile des Fahrzeugs kaum beschädigt; es kommt zu einer geringen mechanischen Verformung, was zu weniger hochfrequenten Beschleunigungssignalanteilen führt. Die erfindungsgemäße Methode macht die hoch- bzw. niederfrequenten Anteile im Beschleunigungssignal erkennbar, womit eine robuste Entscheidung zwischen Auslöse- und Nichtauslösecrashes möglich wird.

Vorteilhafte Weiterbildungen der Erfindung gehen aus den Unteransprüchen hervor.

Es ist zweckmäßig, dass der mindestens eine Schwellwert und der (die) Zeitpunkt(e) für den Schwellwertvergleich des Integrals in Abhängigkeit vom Fahrzeugtyp vorgegeben werden.

Die zeitlich versetzten Beschleunigungsmesswerte werden vorteilhafterweise dadurch erfasst, dass die gemessene Beschleunigung in einen Ringspeicher eingeschrieben wird und dass jeweils die Differenz aus dem ersten und dem letzten in den Ringspeicher eingeschriebenen Beschleunigungswert gebildet wird.

Die Auslöseschwelle, deren Lage in Abhängigkeit von der ermittelten Crashschwere verändert wird, hat vorzugsweise einen von der gemessenen Beschleunigung abhängigen Verlauf.

### Zeichnung

Anhand eines in der Zeichnung dargestellten Ausführungsbeispiels wird nachfolgend die Erfindung näher erläutert. Es zeigen:
- Figur 1: ein Blockschaltbild, das die Bildung einer Auslöseentscheidung verdeutlicht,
- Figur 2: den zeitlichen Verlauf des Integrals der aus Beschleunigungsmesswerten gebildeten Differenz und
- Figur 3: den Verlauf einer gemessenen Geschwindigkeitsänderung und Auslöseschwellen.

### Beschreibung eines Ausführungsbeispiels

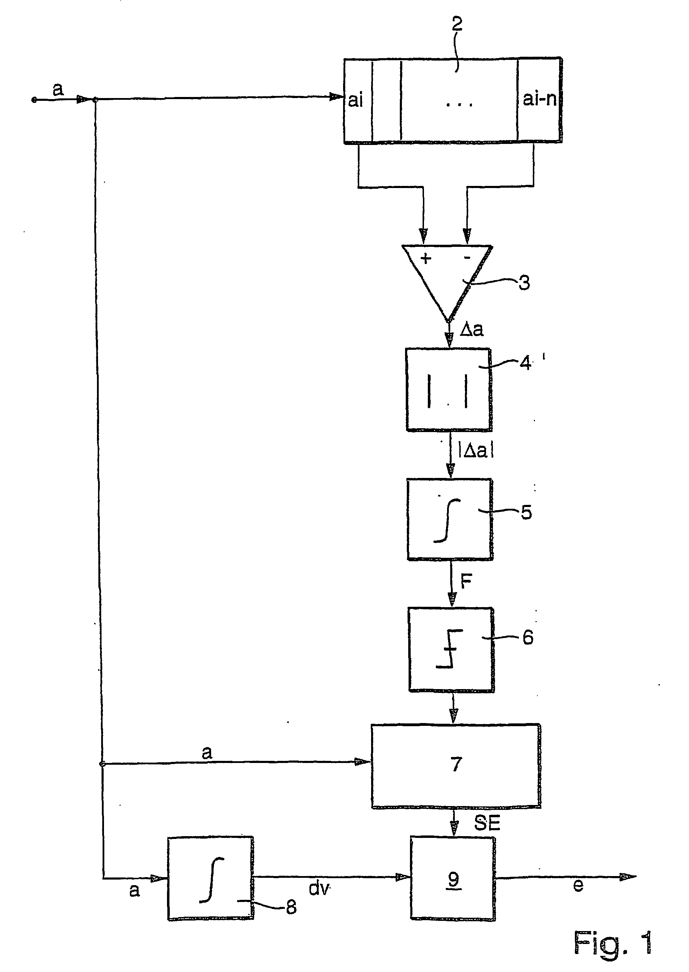

Wie der Figur 1 zu entnehmen ist, wird die im Fahrzeug gemessene Beschleunigung a, z. B. die Beschleunigung in Längsrichtung des Fahrzeugs, an einen Ringspeicher 2 weiterleitet. Der Ringspeicher 2 besteht in bekannter Weise aus mehreren Speicherplätzen, in denen einzelne zeitlich aufeinanderfolgende Beschleunigungsmesswerte ai bis ai-n eingeschrieben werden. Der zeitliche Abstand zwischen dem ersten Beschleunigungsmesswert ai-n und dem letzten Beschleunigungsmesswert ai hängt von der Größe, d. h. der Zahl der Speicherzellen des Ringspeichers ab. Die Größe des betrachteten Zeitfensters des gemessenen Beschleunigungssignals a, d. h. der zeitliche Abstand zwischen dem ersten Beschleunigungswert ai-n und dem letzten in den Ringspeicher 2 eingeschriebenen Beschleunigungswert ai ist massgebend dafür, welcher Frequenzbereich aus dem Beschleunigungssignal a betrachtet werden soll. Die Auswahl des Frequenzbereichs richtet sich im Wesentlichen nach dem Fahrzeugtyp, für den eine Auslöseentscheidung gebildet werden soll.

Die beiden Beschleunigungsmesswerte ai und ai-n werden einem Schaltblock 3 zugeführt, der die Differenz Δa zwischen diesen beiden Messwerten bildet. Im anschließenden Block 4 wird der Betrag der Differenz |Δα| gebildet.

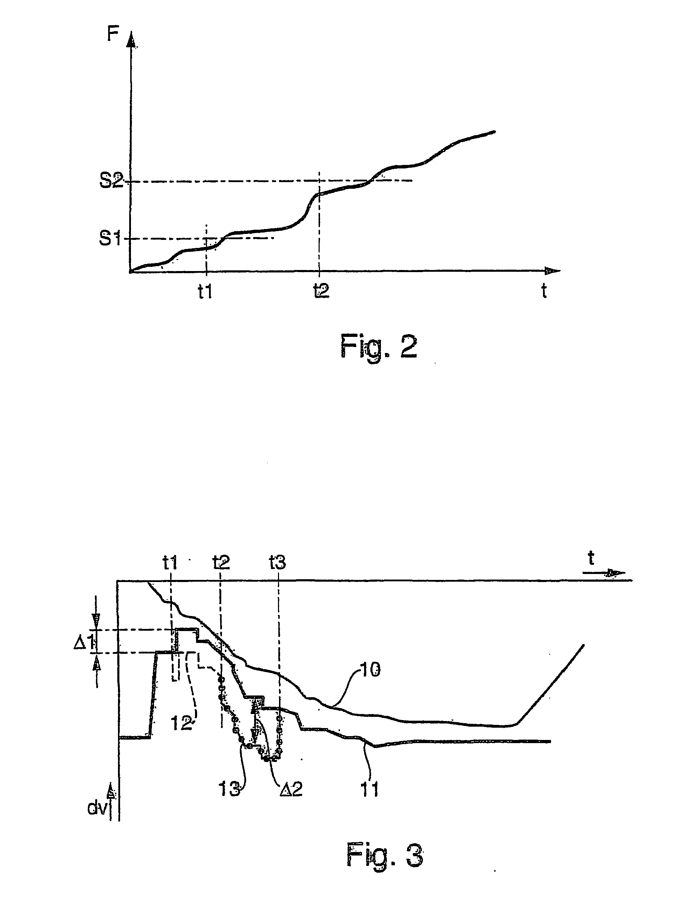

Im Schaltblock 5 wird der Betrag der Differenz |Δα| der zeitlich versetzten Beschleunigungssignalwerte aufintegriert. Das Ergebnis dieser Integration, nämlich das Signal F= ∫|*Δα*|*dt* ist in der Figur 2 dargestellt.

Im Schaltblock 6 findet eine Schwellwertentscheidung für das Ausgangssignal F des Integrierers 5 statt, wobei zwei feste Schwellwerte S1 und S2 vorgegeben sind. Bei der Schwellwertentscheidung in Schaltblock 6 wird bis zu vorgegebenen Zeitpunkten t1 und t2 nach dem Crashbeginn das Integral F auf Überschreitung der Schwellwerte S1 und S2 überprüft. Bis zum früheren Zeitpunkt t1 findet ein Vergleich des Integrals F mit dem niedrigeren Schwellwert S1 und bis zum späteren Zeitpunkt t2 mit dem höheren Schwellwert S2 statt. Die optimalen Lagen für die Zeitpunkte t1 und t2 und für die Schwellwerte S1 und S2 werden empirisch unter dem Gesichtspunkt einer sicheren und robusten Entscheidung zwischen Nichtauslösecrashes und Auslösecrashes für den jeweiligen Fahrzeugtyp ermittelt. In dem in der Figur 2 dargestellten Ausführungsbeispiel überschreitet das Integral F weder bis zum Zeitpunkt t1 den ersten Schwellwert S1 noch bis zum Zeitpunkt t2 den zweiten Schwellwert S2. Ein derartiger Verlauf des Integrals F deutet mit großer Sicherheit darauf hin, dass es sich hier um einen Nichtauslösecrash handelt, bei dem nur eine geringe mechanische Verformung der Fahrzeugkarosserie stattfindet. Würden beide Schwellwerte S1 bzw. S2 bis zu den Zeitpunkten t1 bzw. t2 vom Integral F überschritten, läge mit Sicherheit ein Auslösecrash vor, der eine starke mechanische Verformung der Fahrzeugkarosserie zur Folge hätte.

In der Figur 3 ist ein Verlauf 10 der Geschwindigkeitsänderung dv dargestellt, die sich durch Integration des Beschleunigungssignals a im Schaltblock 8 ergibt. Diese Geschwindigkeitsänderung dv wird im Schaltblock 9 mit einer Auslöseschwelle SE verglichen, welche im Schaltblock 7 ermittelt wird. Wird im Schaltblock 9 festgestellt, dass die Geschwindigkeitsänderung dv die vom Schaltblock 7 erzeugte Auslöseschwelle SE überschreitet, wird eine Auslöseentscheidung e an ein nicht dargestelltes Steuergerät für Rückhaltemittel im Fahrzeug ausgegeben. Im Schaltblock 7 wird in Abhängigkeit von der gemessenen Beschleunigung a eine Schwelle berechnet, welche z. B. den in der Figur 3 angegebenen Verlauf 11 haben kann. Die Berechnung einer Auslöseschwelle in Abhängigkeit von der gemessenen Beschleunigung a wird beispielsweise in der eingangs zitierten EP 0 458 796 B2 beschrieben. Ein so ermittelter Verlauf der Auslöseschwelle hat den Vorteil, dass eine Fehlauslösung der Rückhaltemittel möglichst weitgehend vermieden wird.

Stellt der Schaltblock 6 bei der Schwellwertentscheidung des Integrals F fest, dass der erste Schwellwert S1 bis zum Zeitpunkt t1 nicht überschritten worden ist, so wird im Schaltblock 7 zu diesem Zeitpunkt t1 die Auslöseschwelle um einen Betrag Δ1 so verlagert, dass sich der Abstand zwischen der Auslöseschwelle und dem Verlauf 10 der Geschwindigkeitsänderung dv um diesen Betrag Δ1 vergrößert. Damit verringert sich die Wahrscheinlichkeit, dass die Geschwindigkeitsänderung dv die (in der Zeichnung strichliert gezeichnete) neue Auslöseschwelle 12 überschreitet, so dass bei einem Nichtauslösecrash ein Auslösen der Rückhaltesysteme mit grosser Sicherheit verhindert wird. Überschreitet das Integral F auch bis zum Zeitpunkt t2 den zweiten Schwellwert S2 nicht, so wird ab dem Zeitpunkt t2 die Auslöseschwelle um einen noch größeren Betrag Δ2 verlagert, so dass der Abstand des Verlaufs 10 der Geschwindigkeitsänderung dv gegenüber der (in der Zeichnung strichpunktiert gezeichneten) neuen Auslöseschwelle 13 noch größer wird. Die Sicherheit, dass bei einem Nichtauslösecrash die Auslöseschwelle von der Geschwindigkeitsänderung dv nicht überschritten wird, wird damit noch weiter vergrößert. Würde beispielsweise das Integral F vor dem Zeitpunkt t2 den oberen Schwellwert S2 überschreiten, so würde die Auslöseschwelle weiter mit dem Abstand Δ1 gemäß dem strichlierten Verlauf 12 gegenüber der ursprünglich berechneten Auslöseschwelle 11 weiter verlaufen.

Anstatt nur zwei diskrete Schwellwerte S1 und S2 für das Integral F vorzugeben, können auch mehrere diskrete Schwellwerte bzw. im einfachsten Fall auch nur ein diskreter Schwellwert vorgegeben werden. Auch kann das Integral F mit einer Schwellwert-Kennlinie verglichen werden, die einen zeitabhängigen Verlauf hat. In diesem Fall würde sich der Abstand einer neu berechneten Auslöseschwelle gegenüber der ursprünglich berechneten Auslöseschwelle 11 mit der Zeit kontinuierlich ändern. Hierfür wäre aber eine erheblich höhere Rechner- und Speicherkapazität erforderlich, als wenn man, wie in dem Ausführungsbeispiel dargestellt, mit einigen wenigen diskreten Schwellwerten arbeiten würde.

Anstelle, wie in der Figur 3 dargestellt, die Geschwindigkeitsänderung dv, könnte auch direkt das gemessene Beschleunigungssignal mit einer Auslöseschwelle verglichen werden, um zu einer Auslöseentscheidung e zu gelangen.

## Patentansprüche

1. Verfahren zur Bildung einer Auslöseentscheidung für Rückhaltemittel in einem Fahrzeug, wobei die Beschleunigung (a) des Fahrzeugs gemessen wird und die gemessene Beschleunigung (a) oder eine daraus abgeleitete Geschwindigkeitsänderung (dv) mit einer Auslöseschwelle (11) verglichen wird und ein Überschreiten der Auslöseschwelle (11) zu einer Auslösung der Rückhaltemittel führt, wobei der Verlauf der Auslöseschwelle (12, 13) und damit die Auslöseempfindlichkeit in Abhängigkeit von einer ermittelten Crashschwere gewählt wird, **dadurch gekennzeichnet,**
- **dass** aus zeitlich versetzten Beschleunigungsmesswerten (ai, ai-n) die Differenz (Δa) gebildet wird,
- **dass** der Betrag der Differenz (Δa) integriert wird,
- **dass** das Integral (F) mit mindestens einem Schwellwert (S1, S2) verglichen wird,
- und **dass**, wenn das Integral (F) den mindestens einen Schwellwert (S1, S2) bis zu einem oder mehreren vorgebbaren Zeitpunkten (t1, t2) während des Crashverlaufs nicht überschreitet, der Verlauf der Auslöseschwelle (12,13) so verändert wird, dass die Auslöseempfindlichkeit geringer wird.

2. Verfahren nach Anspruch 1, **dadurch gekennzeichnet, dass** der mindestens eine Schwellwert (S1, S2) und der eine oder mehrere Zeitpunkte) (t1, t2) für den Schwellwertvergleich des Integrals (F) in Abhängigkeit vom Fahrzeugtyp vorgegeben werden.

3. Verfahren nach Anspruch 1, **dadurch gekennzeichnet, dass** die gemessene Beschleunigung (a) in einen Ringspeicher (2) eingeschrieben wird und dass jeweils die Differenz (Δa) aus dem ersten (ai-n) und dem letzten (ai) in den Ringspeicher (2) eingeschriebenen Beschleunigungswert gebildet wird.

4. Verfahren nach Anspruch 1, **dadurch gekennzeichnet, dass** die Auslöseschwelle (10) einen von der gemessenen Beschleunigung (a) abhängigen Verlauf hat.

## Claims

1. Method for reaching a triggering decision for restraining means in a vehicle, the acceleration (a) of the vehicle being measured and the measured acceleration (a) or a change in speed (dv) derived therefrom being compared with a triggering threshold (11), and upward transgression of the triggering threshold (11) giving rise to triggering of the restraining means, the profile of the triggering threshold (12, 13), and thus the triggering sensitivity, being selected as a function of a severity of a crash which is determined, **characterized**
- **in that** the difference (Δa) between chronologically offset acceleration measurement values (ai, ai-n) is formed,
- **in that** the absolute value of the difference (Δa) is integrated,
- **in that** the integral (F) is compared with at least one threshold value (S1, S2),
- and **in that** if the integral (F) does not exceed the at least one threshold value (S1, S2). up to one or more predefinable times (tl, t2) during the crash profile, the profile of the triggering threshold (12, 13) is changed in such a way that the triggering sensitivity becomes less.

2. Method according to Claim 1, **characterized in that** the at least one threshold value (S1, S2) and the one or more times (tl, t2) for the threshold value comparison of the integral (F) are predefined as a function of the type of vehicle.

3. Method according to Claim 1, **characterized in that** the measured acceleration (a) is written into a toroidal-core memory (2) and **in that** in each case the difference (Δa) between the first acceleration value (ai-n) and the last acceleration value (ai) written into the toroidal-core memory (2) is formed.

4. Method according to Claim 1, **characterized in that** the triggering threshold (10) has a profile which is dependent on the measured acceleration (a).

## Revendications

1. Procédé pour établir une décision de déclenchement d'un moyen de retenue dans un véhicule, selon lequel
- l'accélération (a) du véhicule est mesurée et cette valeur mesurée (a) ou une variation (dv) de la vitesse qui en est dérivée est comparée a un seuil de déclenchement (11), et
- un dépassement du seuil (11) conduit à un déclenchement du moyen de retenue, en choisissant la courbe du seuil de déclenchement (12, 13) et donc la sensibilité de déclenchement en fonction d'une importance de crash déterminée,
**caractérisé en ce que**
- la différence (Δa) de valeur des mesures d'accélération (ai, ai-n) décalées dans le temps est établie,
- le montant de la différence (Δa) est intégré,
- l'intégrale (F) obtenue est comparée à au moins une valeur de seuil (S1, S2), et
- si l'intégrale (F), pendant le déroulement du crash jusqu'à un ou plusieurs instants (tl, t2) qui peuvent être prédéfinis, ne dépasse pas au moins une valeur de seuil, (S1, S2), la courbe du seuil déclencheur (12, 13) est modifiée de manière à réduire la sensibilité de déclenchement.

2. Procédé selon la revendication 1,
**caractérisé en ce qu'**
au moins une valeur de seuil (S1, S2) et le ou les instants (1, t2) de comparaison de l'intégrale (F) sont prédéfinis en fonction du type de véhicule.

3. Procédé selon la revendication 1,
**caractérisé en ce que**
l'accélération (a) est enregistrée dans une mémoire annulaire (2) et la différence (Δa) entre la première (ai-n) et la dernière (ai) valeur d'accélération inscrite dans la mémoire (2) est établie chaque fois.

4. Procédé selon la revendication 1,
**caractérisé en ce que**
le seuil de déclenchement (11) évolue en fonction de l'accélération (a) mesurée.
